# EUROPÄISCHE PATENTSCHRIFT

(11) **EP 3 130 197 B1**
(45) Veröffentlichungstag und Bekanntmachung des Hinweises auf die Patenterteilung: **01.11.2017**
(21) Anmeldenummer: 16701976.9
(22) Anmeldetag: 01.02.2016
(51) Int. Cl.: H05B 6/06, H05B 6/12

(54) **INDUKTOR, INSBESONDERE ZUR MAGNETISCH GEKOPPELTEN ENERGIEÜBERTRAGUNG, SOWIE VERFAHREN ZUM BETREIBEN EINES DERARTIGEN INDUKTORS**
INDUCTANCE, ESPECIALLY FOR TRANSMISSION OF ENERGY VIA MAGNETIC COUPLING, AND METHOD TO CONTROL SUCH AN INDUCTANCE
INDUCTANCE, EN PARTICULIER POUR TRANSMISSION D'ÉNERGIE PAR COUPLAGE MAGNÉTIQUE, ET MÉTHODE POUR CONTRÔLER UNE TELLE INDUCTANCE

(30) Priorität: 05.02.2015 DE 102015202032
(43) Veröffentlichungstag der Anmeldung: 15.02.2017
(73) Patentinhaber: Würth Elektronik eiSos GmbH & Co. KG, 74638 Waldenburg (DE)
(72) Erfinder: SOM, Cem, 85604 Zorneding (DE)
(74) Vertreter: Rau, Schneck & Hübner Patentanwälte Rechtsanwälte PartGmbB
(86) Internationale Anmeldenummer: PCT/EP2016/052039
(87) Internationale Veröffentlichungsnummer: WO 2016/124526

(56) Entgegenhaltungen:
- EP-A1- 2 770 801
- EP-A2- 0 158 353
- EP-A2- 2 170 010
- WO-A1-94/05137
- CN-U- 202 178 888
- JP-A- 2008 153 143
- US-A1- 2004 108 311
- US-A1- 2010 206 867

## Beschreibung

Die Erfindung betrifft einen Induktor, insbesondere zur magnetisch gekoppelten Energieübertragung, gemäß dem Oberbegriff des Anspruchs 1. Ferner betrifft die Erfindung ein Verfahren zum Betreiben eines Induktors, insbesondere zur magnetisch gekoppelten Energieübertragung. Der Induktor soll insbesondere zur Verwendung im Haushaltsbereich, insbesondere in einem Induktionskochfeld, dienen.

Aus der EP 1 560 462 A2 ist ein Induktor für ein Induktionskochfeld bekannt, der einen Spulenträger mit einer daran angeordneten Induktionsspule aufweist. Ferner weist der Induktor mehrere Ferritstäbe auf, die radial zu einer Mittellängsachse der Induktionsspule verlaufen und als magnetisches Rückschlussmittel dienen.

Aus der WO 94/05137 A1 ist ein Induktor mit drei konzentrisch zueinander angeordneten Spulen bekannt. Zwischen jeweils zwei Spulen und im Zentrum der Spulen sind magnetische Kerne angeordnet. Die Spulen werden in Abhängigkeit eines Bodendurchmessers eines Kochbehälters miteinander kombiniert und mit Energie versorgt.

Aus der EP 2 170 010 A2 ist ein Induktor mit zwei Spulen bekannt. Die Spulen sind unabhängig voneinander oder gemeinsam betreibbar.

Aus der CN 202 178 888 U ist ein Induktor mit einem Spulenträger und einer daran angeordneten Spule bekannt. Der Induktor weist mehrere magnetische Elemente auf, die aus einem radial angeordneten Stab und einem teilkreisförmigen Stab ausgebildet sind.

Aus der US 2004/0108311 A1 ist ein Induktor mit einer spiralförmigen Spule und einem magnetischen Kern bekannt.

Aus der EP 2 770 801 A1 ist ein Induktor mit einem Spulenträger bekannt, der einen ersten Teilträger und einen zweiten Teilträger aus Kunststoff aufweist. An dem Spulenträger sind zwei spiralförmig gewickelte Spulen angeordnet.

Aus der EP 0 158 353 A2 ist ein Induktor mit einer Spule bekannt, die an einem Spulenträger angeordnet ist. In Ausnehmungen des Spulenträgers sind magnetische Stäbe angeordnet.

Aus der US 2010/0206867 A1 ist ein Induktor mit drei Spulen bekannt, bei dem die erste Spule ausschließlich zusammen mit der zweiten Spule betrieben wird.

Aus der JP 2008153143 A ist ein Induktor mit einer ersten Spule und einer diese umgebenden zweiten Spule bekannt. Die erste Spule weist zwei Teilspulen auf, die ausschließlich zusammen betrieben werden.

Der Erfindung liegt die Aufgabe zugrunde, einen Induktor zu schaffen, der in flexibler und effizienter Weise einsetzbar ist. Der Induktor soll insbesondere zur magnetisch gekoppelten Energieübertragung einsetzbar sein.

Diese Aufgabe wird durch einen Induktor mit den Merkmalen des Anspruchs 1 gelöst. Der Induktor weist mindestens zwei Spulen bzw. Induktionsspulen auf, wobei die erste Spule mit einer ersten Betriebsfrequenz F₁ in einem ersten Leistungsbereich und die zweite Spule mit einer zweiten Betriebsfrequenz F₂ in einem zweiten Leistungsbereich betreibbar ist bzw. betrieben wird. Die Betriebsfrequenzen F₁ und F₂ sind insbesondere ungleich. Die erste Spule dient zur induktiven Energieübertragung in einem Niedrig-Leistungsbereich, wohingegen die zweite Spule zur induktiven Energieübertragung in einem Hoch-Leistungsbereich dient. Für eine Übertragungsleistung P₁ der ersten Spule im Niedrig-Leistungsbereich gilt: 0 W ≤ P₁ ≤ 300 W, insbesondere 0 W ≤ P₁ ≤ 250 W, und insbesondere 0 W ≤ P₁ ≤ 200 W. Demgegenüber gilt für eine Übertragungsleistung P₂ der zweiten Spule und gegebenenfalls einer dritten Spule in dem Hoch-Leistungsbereich: 200 W ≤ P₂ ≤ 4,0 kW, insbesondere 250 W ≤ P₂ ≤ 3,3 kW, und insbesondere 300 W ≤ P₂ ≤ 2,4 kW. Durch die Kombination der Spulen können in flexibler Weise verschiedenste Anwendungen mit unterschiedlichen erforderlichen Leistungsklassen bedient werden. Da die Spulen unabhängig voneinander, also nicht gleichzeitig, betrieben werden, wird eine wechselseitige Beeinflussung der Spulen vermieden, wodurch in dem jeweiligen Leistungsbereich eine hohe Effizienz erzielt wird. Die erste Spule kann beispielsweise zur drahtlosen Aufladung eines Mobiltelefons genutzt werden, wohingegen die zweite Spule zum Betrieb von Geräten mit höherer Leistung, wie beispielsweise Küchenmaschinen oder Staubsauger-Roboter, genutzt werden kann.

Zur Erzielung der unterschiedlichen Leistungsbereiche ist der Außendurchmesser D₂ der zweiten Spule größer als der Außendurchmesser D₁ der ersten Spule. Für den Außendurchmesser D₁ gilt insbesondere: 10 mm ≤ D₁ ≤ 60 mm, insbesondere 15 mm ≤ D₁ ≤ 55 mm, und insbesondere 20 mm ≤ D₁ ≤ 50 mm. Für den Außendurchmesser D₂ gilt insbesondere: 100 mm ≤ D₂ ≤ 180 mm, insbesondere 110 mm ≤ D₂ ≤ 160 mm, und insbesondere 120 mm ≤ D₂ ≤ 140 mm. Für einen Innendurchmesser d₂ der zweiten Spule gilt vorzugsweise: d₂ > D₁.

Ferner weist die erste Spule eine erste Induktivität L₁ auf, für die vorzugsweise gilt: 1 µH ≤ L₁ ≤ 100 µH, insbesondere 4 µH ≤ L₁ ≤ 50 µH, und insbesondere 5 µH ≤ L₁ ≤ 25 µH. Entsprechend weist die zweite Spule eine zweite Induktivität L₂ auf, für die vorzugsweise gilt: 50 µH ≤ L₂ ≤ 150 µH, insbesondere 70 µH ≤ L₂ ≤ 130 µH, und insbesondere 90 µH ≤ L₂ ≤ 120 µH.

Der Induktor gewährleistet eine hohe Effizienz. Durch den magnetischen Kern werden die magnetischen Feldlinien besser geführt, wodurch das Streufeld reduziert wird. Der magnetische Kern kann einteilig ausgebildet sein oder aus mehreren Kernelementen zusammengesetzt sein. Vorzugsweise ist der magnetische Kern ein Ferrit-Kern. Der magnetische Kern kann eine beliebige geschlossene Form aufweisen. Der magnetische Kern hat beispielsweise eine polygonale, runde, halb-runde, ovale oder halbovale Querschnittsform.

Der Induktor gewährleistet eine hohe Effizienz. Die Steuereinheit stellt sicher, dass die erste Spule und die zweite Spule ausschließlich unabhängig voneinander betrieben werden. Dies bedeutet, dass entweder die erste Spule oder die zweite Spule betrieben wird. Die Steuereinheit verhindert also, dass die erste Spule und die zweite Spule gleichzeitig betrieben werden.

Durch die dritte Spule wird die Flexibilität bei der Anwendung im Hoch-Leistungsbereich erhöht. Durch die dritte Spule wird der Hoch-Leistungsbereich erweitert bzw. vollständig ausgeschöpft. Für den Außendurchmesser D₃ gilt vorzugsweise: 160 mm ≤ D₃ ≤ 250 mm, insbesondere 170 mm ≤ D₃ ≤ 240 mm, und insbesondere 180 mm ≤ D₃ ≤ 230 mm. Die dritte Spule hat ferner einen dritten Innendurchmesser d₃, für den vorzugsweise gilt: d₃ > D₂. Die dritte Spule weist eine dritte Induktivität L₃ auf, für die vorzugsweise gilt: 20 µH ≤ L₃ ≤ 100 µH, insbesondere 30 µH ≤ L₃ ≤ 90 µH, und insbesondere 50 µH ≤ L₃ ≤ 80 µH.

Die dritte Spule ist in Abhängigkeit von der zweiten Spule betreibbar. Beispielsweise wird die dritte Spule zur Erhöhung der Leistung mit der zweiten Spule in Reihe oder parallel geschaltet. Die dritte Spule ist ausschließlich zusammen mit der zweiten Spule betreibbar. Demgegenüber ist die erste Spule ausschließlich unabhängig, von der zweiten Spule und der dritten Spule betreibbar. Hierzu weist der Induktor eine Steuereinheit auf, die entsprechend ausgebildet ist.

Ein Induktor nach Anspruch 2 gewährleistet einen effizienten Betrieb im Niedrig-Leistungsbereich. Die an die erste Spule angelegte Spannung U₁ hat eine Amplitude zwischen 0 V und 50 V. Der durch die erste Spule fließende Strom I₁ hat eine Amplitude zwischen 0 A und 15 A.

Ein Induktor nach Anspruch 3 gewährleistet eine hohe Effizienz beim Betrieb der zweiten Spule im Hoch-Leistungsbereich. Die an die zweite Spule angelegte Spannung U₂ hat eine Amplitude zwischen 0 V und 240 V. Der durch die zweite Spule fließende Strom I₂ hat eine Amplitude zwischen 0 A und 30 A.

Ein Induktor nach Anspruch 4 gewährleistet eine hohe Effizienz, da die Feldlinien in optimaler Weise geführt sind. Der Kern weist vorzugsweise eine geschlossene runde oder polygonale, insbesondere rechteckige Form auf. Vorzugsweise ist der magnetische Kern als Ringkern, insbesondere als Ferrit-Ringkern ausgebildet.

Ein Induktor nach Anspruch 5 gewährleistet eine hohe Effizienz. Dadurch, dass der magnetische Kern aus mehreren Kernelementen zusammengesetzt ist, kann die Form in einfacher und flexibler Weise aus fertigungstechnisch einfach herstellbaren Kernelementen zusammengebaut und nach Bedarf optimiert werden. Die Kernelemente können beispielsweise als Stäbe ausgebildet sein, die zu einem als Vieleck ausgebildeten Kern zusammengesetzt werden. Weiterhin können die Kernelemente als Kreisbögen, beispielsweise als Viertel- oder Halb-Kreisbögen ausgebildet und zu einem ringförmigen Kern zusammengesetzt sein. Die Kernelemente sind vorzugsweise als Ferrit-Kernelemente ausgebildet.

Ein Induktor nach Anspruch 6 gewährleistet eine hohe Effizienz sowohl beim Betrieb der ersten Spule im Niedrig-Leistungsbereich als auch beim Betrieb der zweiten Spule im Hoch-Leistungsbereich. Vorzugsweise ist der magnetische Kern als Ringkern, insbesondere als Ferrit-Ringkern, ausgebildet, wobei für einen Innendurchmesser d_{K} des Ringkerns gilt: d_{K} > D₁. Weiterhin gilt vorzugsweise für einen Außendurchmesser D_{K} des Ringkerns und einen Innendurchmesser d₂ der zweiten Spule: d₂ > D_{K}.

Ein Induktor nach Anspruch 7 gewährleistet eine hohe Effizienz. Vorzugsweise sind der magnetische Kern und die Spulen an der Oberseite des Spulenträgers angeordnet. Die Oberseite ist beispielsweise bei einer Küchenapplikation direkt unter einer Arbeitsplatte montiert oder in eine Arbeitsplatte eingelassen.

Ein Induktor nach Anspruch 8 gewährleistet eine hohe Effizienz. Die magnetischen Stäbe ermöglichen eine bessere Führung der Feldlinien, wodurch das Streufeld reduziert wird. Vorzugsweise sind die magnetischen Stäbe als Ferrit-Stäbe ausgebildet. Die Stäbe sind insbesondere rotationssymmetrisch um die Mittellängsachse angeordnet. Vorzugsweise weist der Induktor 3 bis 48, insbesondere 4 bis 36, und insbesondere 6 bis 24 Stäbe auf.

Ein Induktor nach Anspruch 9 gewährleistet eine hohe Effizienz. Durch die Anordnung der magnetischen Stäbe wird das Magnetfeld an der zweiten Seite, insbesondere an der Unterseite, abgeschirmt. Vorzugsweise sind der magnetische Kern an einer Oberseite und die magnetischen Stäbe an einer Unterseite des Spulenträgers angeordnet. Zusätzlich oder alternativ zu den magnetischen Stäben kann die zweite Seite des Spulenträgers mit einem Schirmmaterial versehen sein.

Ein Induktor nach Anspruch 10 gewährleistet eine hohe Effizienz im Hoch-Leistungsbereich.

Ein Induktor nach Anspruch 11 verbessert das thermische Verhalten, wodurch eine hohe Effizienz erzielt wird. Die Durchgangsöffnungen können als Löcher und/oder Schlitze ausgebildet sein. Zusätzlich kann der Induktor einen Lüfter aufweisen, der in Verbindung mit den Durchgangsöffnungen mindestens eine Spule kühlt. Vorzugsweise sind die Durchgangsöffnungen im Bereich der zweiten Spule und/oder der dritten Spule ausgebildet.

Ein Induktor nach Anspruch 12 gewährleistet eine hohe Flexibilität und Effizienz. Durch die spiralförmige Ausbildung der ersten Spule und/oder der zweiten Spule und/oder der dritten Spule, kann eine gewünschte Anzahl an Windungen der jeweiligen Spule in Verbindung mit einer verhältnismäßig flachen Ausbildung der jeweiligen Spule erzielt werden. Die jeweilige Spule kann in einer einzigen Ebene oder in mehreren Ebenen spiralförmig gewickelt sein. Die jeweilige Spule ist höchstens in acht Ebenen, insbesondere höchstens in sechs Ebenen, und insbesondere höchstens in vier Ebenen spiralförmig gewickelt. Die jeweilige Spule hat in radialer Richtung eine gleichbleibende Windungsdichte.

Der Erfindung liegt ferner die Aufgabe zugrunde, ein Verfahren zum Betreiben eines Induktors derart zu schaffen, dass dieser in flexibler und effizienter Weise einsetzbar ist.

Diese Aufgabe wird durch ein Verfahren mit den Merkmalen des Anspruchs 13 gelöst. Die Vorteile des erfindungsgemäßen Verfahrens entsprechen den bereits beschriebenen Vorteilen des erfindungsgemäßen Induktors. Durch den voneinander unabhängigen Betrieb der ersten Spule und der zweiten Spule, also den ausschließlich nicht gleichzeitigen Betrieb der Spulen mit den Betriebsfrequenzen F₁ und F₂, tritt keine wechselseitige Beeinflussung der induktiven Energieübertragung beim Betrieb der ersten Spule oder beim Betrieb der zweiten Spule auf. Hierdurch können auf einfache und flexible Weise Anwendungen in einem Niedrig-Leistungsbereich und in einem Hoch-Leistungsbereich bedient werden. Durch die dritte Spule wird der Hoch-Leistungsbereich erweitert bzw. voll ausgeschöpft. Das erfindungsgemäße Verfahren kann insbesondere auch mit den Merkmalen mindestens eines der Ansprüche 1 bis 12 weitergebildet werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung eines Induktors gemäß einem ersten Ausführungsbeispiel,
- Fig. 2: eine Draufsicht auf eine Oberseite des Induktors mit drei auf einem Spulenträger angeordneten Spulen und einem einteiligen Kern,
- Fig. 3: eine Draufsicht auf eine Unterseite des Spulenträgers mit mehreren magnetischen Stäben,
- Fig. 4: einen ersten Schnitt durch den Induktor entlang der Schnittlinie IV-IV in Fig. 3,
- Fig. 5: einen zweiten Schnitt durch den Induktor entlang der Schnittlinie V-V in Fig. 3,
- Fig. 6: eine perspektivische Ansicht des Spulenträgers ohne die Spulen, und
- Fig. 7: eine Draufsicht auf eine Oberseite eines Induktors gemäß einem zweiten Ausführungsbeispiel mit einem aus Kernelementen zusammengesetzten Kern.

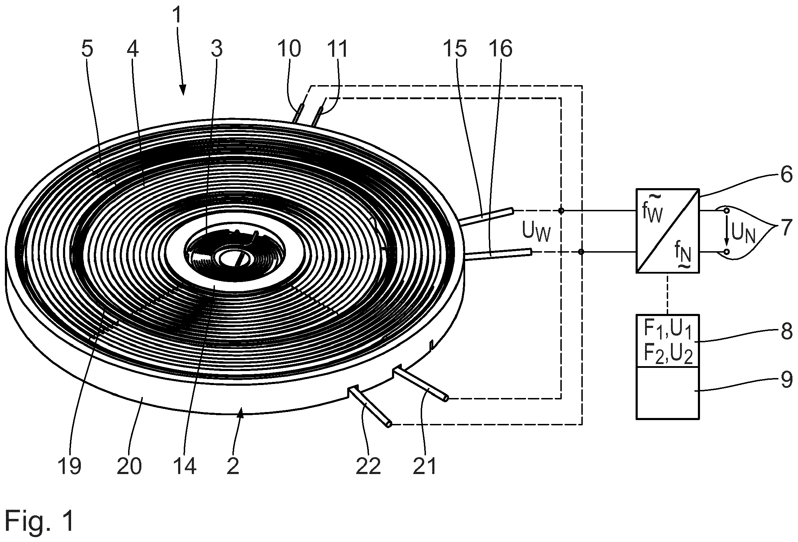

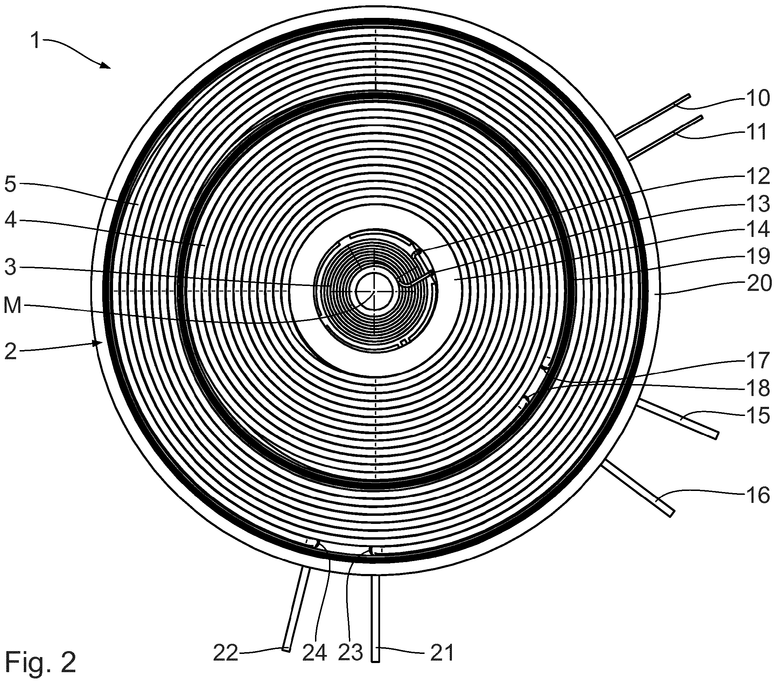

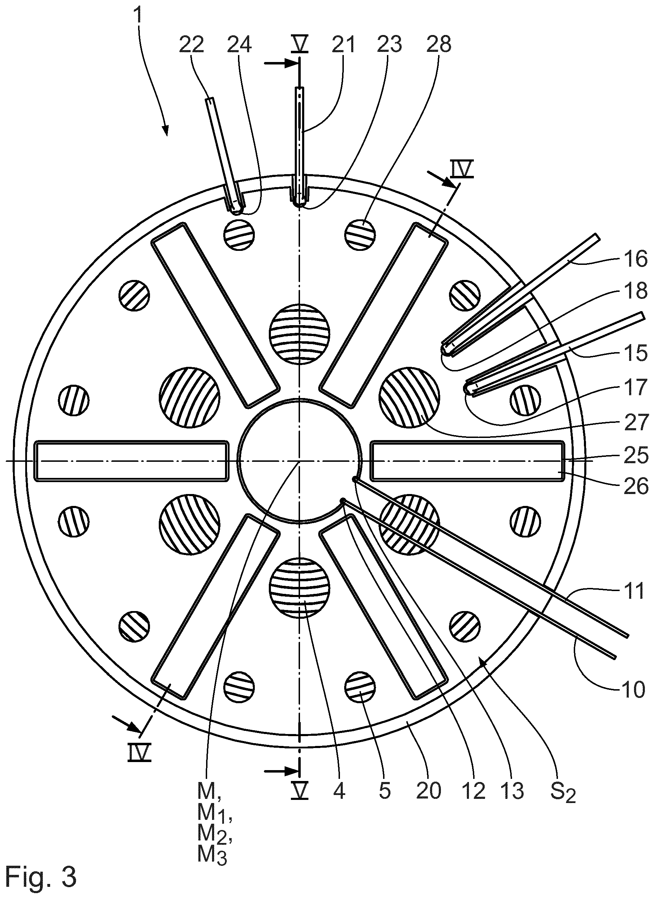

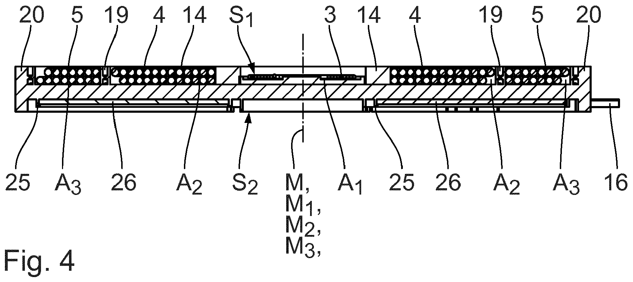

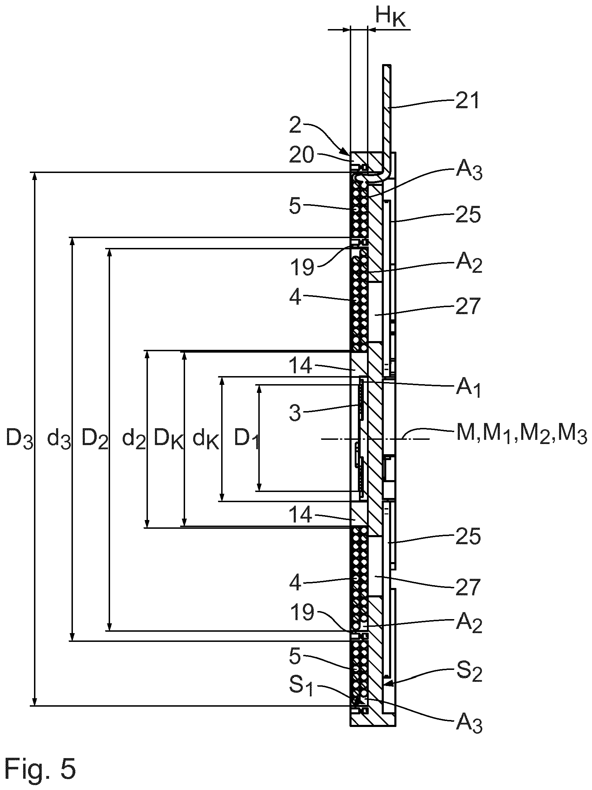

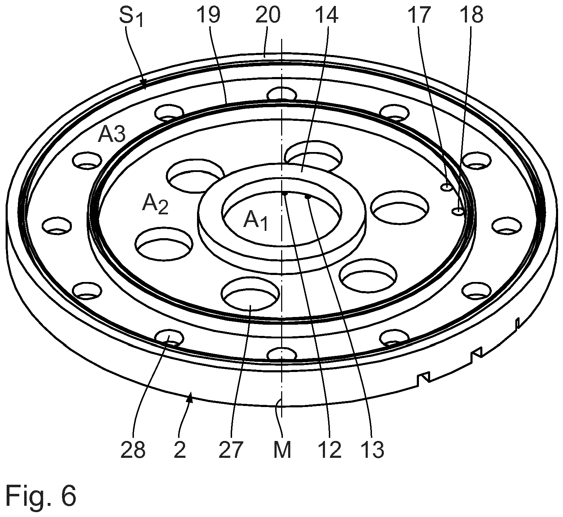

Nachfolgend ist anhand der Fig. 1 bis 6 ein erstes Ausführungsbeispiel der Erfindung beschrieben. Ein Induktor 1 weist einen Spulenträger 2 auf, an dem drei Spulen 3, 4, 5 angeordnet sind. Die Spulen 3, 4, 5 sind mit einem Wechselrichter 6 verbunden, der durch ein Versorgungsnetz 7 mit einer Netzspannung U_{N} und einer Netzfrequenz f_{N} gespeist wird. Der Wechselrichter 6 wird mittels einer Steuereinheit 8 angesteuert, die in Signalverbindung mit einer Eingabeeinheit 9 steht. Der Induktor 1 ist beispielsweise Teil einer Vorrichtung zur induktiv gekoppelten Energieübertragung bzw. Energieversorgung. Der Induktor 1 dient insbesondere zur Verwendung im Haushaltsbereich, beispielsweise in einem Induktionskochfeld.

Der Spulenträger 2 ist scheibenförmig ausgebildet und weist eine Mittellängsachse M auf. An seiner Oberseite S₁ bildet der Spulenträger 2 drei Aufnahmebereiche A₁, A₂ und A₃ für die Spulen 3 bis 5 aus. Die erste Spule 3 ist an der Oberseite S₁ des Spulenträgers 2 im Aufnahmebereich A₁ angeordnet. Die erste Spule 3 ist konzentrisch zu dem Spulenträger 2 angeordnet, so dass eine Mittellängsachse M₁ der ersten Spule 3 deckungsgleich mit der Mittellängsachse M ist. Die erste Spule 3 ist spiralförmig gewickelt und weist zwei Anschlussdrähte 10, 11 auf. Die Anschlussdrähte 10, 11 sind durch zugehörige Durchgangsöffnungen 12, 13 im Spulenträger 2 zu dessen Unterseite S₂ und von dort zu dem Wechselrichter 6 geführt.

Die erste Spule 3 dient zur induktiven Energieübertragung in einem Niedrig-Leistungsbereich. Der Niedrig-Leistungsbereich liegt beispielsweise zwischen 0 W und 200 W. Die erste Spule 3 weist beispielsweise folgende Kenndaten auf:
Außendurchmesser D₁ = 50 mm
Induktivität L₁ = 6,3 µH
Gleichstromwiderstand R_{1DC} = 48 mΩ

Die erste Spule 3 ist von einem magnetischen Kern 14 umgeben. Der magnetische Kern 14 läuft somit um die Mittellängsachse M₁ der ersten Spule 3 um. Der magnetische Kern 14 ist einteilig ausgebildet. Der Kern 14 ist insbesondere als Ferrit-Ringkern ausgebildet.

Der magnetische Kern 14 ist an der Oberseite S₁ des Spulenträgers 2 zwischen der ersten Spule 3 und der zweiten Spule 4 angeordnet. Der magnetische Kern 14 weist einen Innendurchmesser d_{K} auf, für den gilt: d_{K} > D₁.

Die zweite Spule 4 ist an der Oberseite S₁ des Spulenträgers 2 im Aufnahmebereich A₂ angeordnet und umgibt den magnetischen Kern 14. Der magnetische Kern 14 weist beispielsweise einen Außendurchmesser D_{K} von 70 mm und eine Höhe H_{K} von 5 mm auf.

Die zweite Spule 4 ist spiralförmig gewickelt und weist Anschlussdrähte 15, 16 auf. Die Anschlussdrähte 15, 16 sind durch zugehörige Durchgangsöffnungen 17, 18 zu der Unterseite S₂ des Spulenträgers 2 geführt. Von dort sind die Anschlussdrähte 15, 16 zu dem Wechselrichter 6 geführt. Die zweite Spule 4 ist konzentrisch zu dem Spulenträger 2 angeordnet, so dass eine Mittellängsachse M₂ der zweiten Spule 4 deckungsgleich mit der Mittellängsachse M des Spulenträgers 2 ist. Der zweite Aufnahmeraum A₂ ist von einem ringförmigen, inneren Steg 19 begrenzt.

Die zweite Spule 4 dient zur induktiven Energieübertragung in einem Hoch-Leistungsbereich. Der Hoch-Leistungsbereich liegt beispielsweise zwischen 200 W und 4,0 kW. Die zweite Spule 4 weist beispielsweise folgende Kenndaten auf:
Innendurchmesser d₂ = 72 mm
Außendurchmesser D₂ = 140 mm
Induktivität L₂ = 100 µH
Gleichstromwiderstand R_{2DC} = 45 mΩ
Für die zweite Spule 4 gilt ferner: d₂ > D_{K} und somit D₁ < d₂ < D₂.

Da die erste Spule 3 und die zweite Spule 4 unterschiedliche Leistungsbereiche abdecken, ist die Steuereinheit 8 derart ausgebildet, dass die erste Spule 3 und die zweite Spule 4 unabhängig voneinander betreibbar sind. Das bedeutet, dass ausschließlich entweder die erste Spule 3 oder die zweite Spule 4 betreibbar ist.

Die dritte Spule 5 ist an der Oberseite S₁ des Spulenträgers 2 in dem Aufnahmebereich A₃ angeordnet und umgibt die zweite Spule 4 und den ringförmigen inneren Steg 19. Der Aufnahmebereich A₃ wird von dem ringförmigen inneren Steg 19 und einem ringförmigen äußeren Steg 20 begrenzt.

Die dritte Spule 5 ist spiralförmig gewickelt und weist Anschlussdrähte 21, 22 auf. Die Anschlussdrähte 21, 22 sind durch zugehörige Durchgangsöffnungen 23, 24 an die Unterseite S₂ des Spulenträgers 2 geführt. Von dort sind die Anschlussdrähte 21, 22 zu dem Wechselrichter 6 geführt. Die dritte Spule 5 ist konzentrisch zu dem Spulenträger 2 angeordnet, so dass eine Mittellängsachse M₃ der dritten Spule 5 deckungsgleich zu der Mittellängsachse M des Spulenträgers 2 ist.

Die dritte Spule 5 dient zur induktiven Energieübertragung in dem Hoch-Leistungsbereich. Die dritte Spule 5 weist beispielsweise folgende Kenndaten auf:
Innendurchmesser d₃ = 180 mm
Außendurchmesser D₃ = 214 mm
Induktivität L₃ = 60 µH
Gleichstromwiderstand R_{3DC} = 45 mΩ

Da die dritte Spule 5 die zweite Spule 4 umgibt, gilt: d₃ > D₂.

Die Spulen 3, 4, 5 können in einer einzigen Ebene oder in mehreren Ebenen spiralförmig gewickelt sein. Im vorliegenden Ausführungsbeispiel sind die Spulen 3, 4, 5 jeweils in zwei Ebenen spiralförmig gewickelt. Die Spulen 3, 4, 5 weisen in radialer Richtung eine gleichbleibende Windungsdichte auf.

Die dritte Spule 5 ist vorzugsweise ausschließlich in Abhängigkeit der zweiten Spule 4 betreibbar, beispielsweise dadurch, dass die dritte Spule 5 bei Bedarf zu der zweiten Spule 4 parallel oder in Reihe geschaltet wird. Beispielsweise deckt die zweite Spule 4 nur einen ersten Teilbereich des Hoch-Leistungsbereichs ab, so dass durch den zusätzlichen Betrieb der dritten Spule 5 ein verbleibender zweiter Teilbereich des Hoch-Leistungsbereichs abgedeckt werden kann. Dementsprechend ist die Steuereinheit 8 derart ausgebildet, dass die dritte Spule 5 ausschließlich in Abhängigkeit der zweiten Spule 4 betreibbar ist. Die dritte Spule 5 ist entsprechend der zweiten Spule 4 unabhängig von der ersten Spule 3 betreibbar. Anders ausgedrückt, ist die erste Spule 3 unabhängig von den Spulen 4 und 5 betreibbar.

An der Unterseite S₂ sind an dem Spulenträger 2 mehrere Aufnahmen 25 ausgebildet, die unterhalb der Aufnahmebereiche A₂ und A₃ radial zu der Mittellängsachse M bzw. M₁ verlaufen. In den Aufnahmen 25 sind magnetische Stäbe 26 angeordnet, die insbesondere als Ferrit-Stäbe ausgebildet sind. Die Stäbe 26 erstrecken sich außerhalb des Aufnahmebereichs A₁ der ersten Spule 3 in den Aufnahmebereichen A₂ und A₃ der Spulen 4, 5.

Zur Kühlung der Spulen 4, 5 weist der Spulenträger 2 in den Aufnahmebereichen A₂ und A₃ mehrere Durchgangsöffnungen 27, 28 auf. Die Durchgangsöffnungen 27, 28 sind beispielsweise kreisförmig und/oder schlitzförmig ausgebildet. Die in dem Aufnahmebereich A₃ ausgebildeten Durchgangsöffnungen 28 weisen beispielsweise einen kleineren Durchmesser auf als die in dem Aufnahmebereich A₂ ausgebildeten Durchgangsöffnungen 27.

Die Funktionsweise des Induktors 1 ist wie folgt:
Bei einem Betrieb des Induktors 1 in dem Niedrig-Leistungsbereich wird ausschließlich die erste Spule 3 betrieben. Hierzu wird mittels der Eingabeeinheit 9 die erste Spule 3 und die gewünschte Übertragungsleistung P₁ ausgewählt und der Steuereinheit 8 übermittelt. Die Steuereinheit 8 steuert den Wechselrichter 6 entsprechend an und gibt diesem die erste Betriebsfrequenz F₁ und eine erste Spannung U₁ vor. Der Wechselrichter 6 stellt aus der gegebenen Netzfrequenz f_{N} sowie der gegebenen Netzspannung U_{N} die von der Steuereinheit 8 vorgegebene Betriebsfrequenz F₁ und die Spannung U₁ ausgangsseitig des Wechselrichters 6 bzw. spulenseitig ein. Für die Ausgangsspannung U_{W} bzw. die Ausgangsfrequenz f_{W} des Wechselrichters 6 gilt somit idealerweise: f_{W} = F₁ und U_{W} = U₁.

Für die erste Betriebsfrequenz F₁ gilt: 100 kHz ≤ F₁ ≤ 220 kHz, insbesondere 100 kHz ≤ F1 ≤ 210 Hz, und insbesondere 120 kHz ≤ F1 ≤ 200 kHz.

Die erste Spule 3 kann in dem Niedrig-Leistungsbereich zwischen 0 W und 200 W betrieben werden, so dass beispielsweise mit der ersten Spule 3 ein tragbares Gerät, wie beispielsweise ein Mobiltelefon, eine Smartwatch, ein Fitnesstracker, eine Digitalkamera, ein Babyphone, ein Funkgerät oder eine Fernbedienung, induktiv geladen werden kann.

Durch den magnetischen Kern 14 werden die von der ersten Spule 3 erzeugten Feldlinien geführt und das Streufeld reduziert, wodurch eine hohe Effizienz bei der induktiven Energieübertragung erzielt wird. Beim Betrieb der ersten Spule 3 wird die zweite Spule 4 und/oder die dritte Spule 5 nicht gleichzeitig betrieben.

Bei einem Betrieb des Induktors 1 in dem Hoch-Leistungsbereich wird die zweite Spule 4 und gegebenenfalls zusätzlich die dritte Spule 5 betrieben. Hierzu wird mittels der Eingabeeinheit 9 die Spule 4 und die gewünschte Übertragungsleistung P₂ ausgewählt und an die Steuereinheit 8 übermittelt. Die Steuereinheit 8 steuert den Wechselrichter 6 entsprechend an und gibt diesem die zweite Betriebsfrequenz F₂ und eine zweite Spannung U₂ vor. Der Wechselrichter 6 stellt die Betriebsfrequenz F₂ und die Spannung U₂ ein, so dass ausgangsseitig idealerweise gilt: f_{W} = F₂ und U_{W} = U₂. Die Steuereinheit 8 gibt dem Wechselrichter 6 zudem vor, ob die gewünschte Übertragungsleistung P₂ ausschließlich durch Betrieb der zweiten Spule 4 erreichbar ist, oder ob zusätzlich die dritte Spule 5 benötigt wird. Wird die dritte Spule 5 zusätzlich benötigt, so werden die Spulen 4 und 5 parallel oder in Reihe geschaltet. Dies ist schematisch in Fig. 1 veranschaulicht. Die dritte Spule 5 wird somit entsprechend der zweiten Spule 4 mit der Betriebsfrequenz F₂ und der Spannung U₂ betrieben.

Für die zweite Betriebsfrequenz F₂ gilt: 40 kHz ≤ F2 ≤ 250 kHz, insbesondere 50 kHz ≤ F2 ≤ 200 kHz, und insbesondere 60 kHz ≤ F2 ≤ 120kHz. Die zweite Betriebsfrequenz F₂ ist insbesondere ungleich zu der ersten Betriebsfrequenz F₁.

Der magnetische Kern 14 führt wiederum die magnetischen Feldlinien, so dass das Streufeld reduziert wird. Hierdurch wird eine hohe Effizienz bei der Energieübertragung erzielt. Zudem wird das erzeugte Magnetfeld an der Unterseite S₂ durch die magnetischen Stäbe 26 abgeschirmt, wodurch ebenfalls eine hohe Effizienz erzielt wird. Die Spulen 4, 5 werden durch die Durchgangsöffnungen 27, 28 gekühlt. Gegebenenfalls kann hierzu zusätzlich ein nicht dargestellter Lüfter eingesetzt werden.

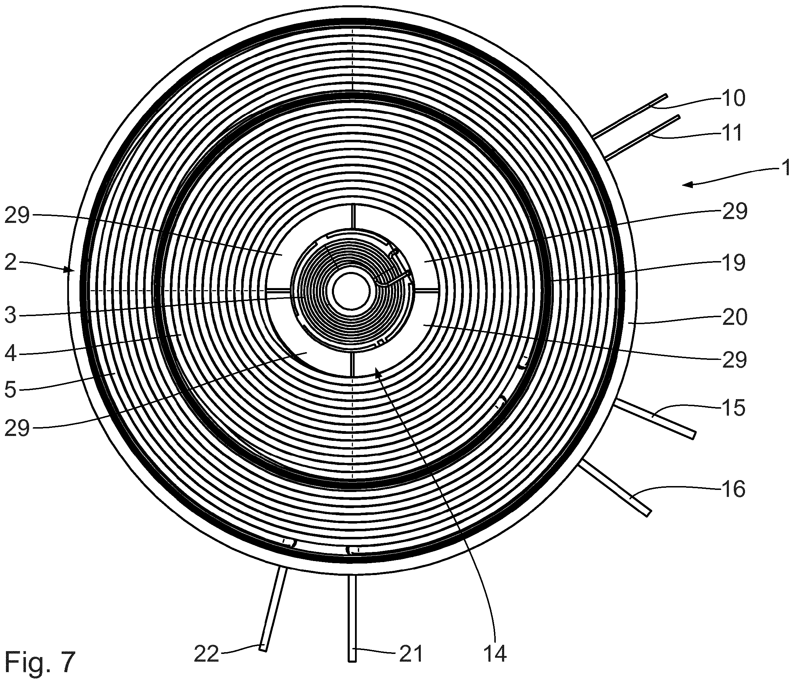

Nachfolgend ist anhand von Fig. 7 ein zweites Ausführungsbeispiel der Erfindung beschrieben. Im Unterschied zu dem ersten Ausführungsbeispiel ist der magnetische Kern 14 aus mehreren Kernelementen 29 zusammengesetzt. Der Kern 14 ist ringförmig ausgebildet und aus vier Viertel-Kreisbögen zusammengesetzt. Durch das Zusammensetzen des magnetischen Kerns 14 können verschiedenste Formen des Kerns 14 mit standardisierten Kernelementen 29 in einfacher Weise gebildet werden. Die Kernelemente 29 sind insbesondere als Ferrit-Kernelemente ausgebildet. Hinsichtlich des weiteren Aufbaus und der weiteren Funktionsweise des Induktors 1 wird auf das vorangegangene Ausführungsbeispiel verwiesen.

Der erfindungsgemäße Induktor 1 ermöglicht in einfacher und flexibler Weise verschiedenste Anwendungen. Die erste Spule 3 wird in einem Niedrig-Leistungsbereich, beispielsweise bis 200 W, und die zweite Spule 4 sowie gegebenenfalls die dritte Spule 5 in einem Hoch-Leistungsbereich, beispielsweise ab 200 W, eingesetzt. In dem Niedrig-Leistungsbereich wird ausschließlich die erste Spule 3 betrieben, wohingegen in dem Hoch-Leistungsbereich entweder ausschließlich die zweite Spule 4 oder die zweite Spule 4 und dritte Spule 5 gemeinsam betrieben werden. Die Kombination der unterschiedlichen Spulen 3, 4, 5 ermöglicht unterschiedliche Applikationen mit unterschiedlichen Leistungsklassen. Da die erste Spule 3 im Niedrig-Leistungsbereich und die zweite Spule 4 bzw. gegebenenfalls zusätzlich die dritte Spule 5 im Hoch-Leistungsbereich niemals gleichzeitig in Betrieb sind, tritt keine Beeinflussung bei der Energieübertragung im Niedrig-Leistungsbereich und im Hoch-Leistungsbereich auf. Durch die Kombination des magnetischen Kerns 14 und der magnetischen Stäbe 26 wird eine effiziente Energieübertragung durch induktive Kopplung mit geringen Verlusten ermöglicht.

Die Anschlussdrähte 10, 11 der ersten Spule 3 können als Litzendraht ausgebildet sein und Querschnitte von 0,1 mm² bis 2,5 mm² haben. Die Anschlussdrähte 10, 11 können mit Materialien, wie beispielsweise Nylon, Seide oder Folien ummantelt sein. Die Anschlussdrähte 15, 16, 21, 22 der zweiten und dritten Spule 4, 5 können als Litzendraht ausgebildet sein und einen Querschnitt von 0,5 mm² bis 5 mm² haben. Die Anschlussdrähte 15, 16, 21, 22 können mit Materialien, wie beispielsweise Nylon, Seide oder Folien ummantelt sein.

Zur Kühlung der Spulen 4, 5 kann ein Lüfter vorgesehen sein. Alternativ oder zusätzlich können Kühlbleche vorgesehen sein. Der Induktor 1 kann an einer Seite oder an beiden Seiten mit einem Deckel abgedeckt sein. Weiterhin kann der Induktor 1 vergossen sein.

## Patentansprüche

1. Induktor, insbesondere zur magnetisch gekoppelten Energieübertragung, mit
- einem Spulenträger (2),
- einer an dem Spulenträger (2) angeordneten ersten Spule (3) zur Energieübertragung in einem ersten Leistungsbereich, die einen ersten Außendurchmesser D₁ hat,
- einer an dem Spulenträger (2) angeordneten zweiten Spule (4) zur Energieübertragung in einem zweiten Leistungsbereich, die einen zweiten Außendurchmesser D₂ hat, wobei der zweite Außendurchmesser D₂ größer als der erste Außendurchmesser D₁ ist,
- einer an dem Spulenträger (2) angeordneten dritten Spule (5), die einen Außendurchmesser D₃ hat, der größer als der Außendurchmesser D₂ ist,
- einem magnetischen Kern (14), der um eine Mittellängsachse (M₁) der ersten Spule (3) umläuft,
**gekennzeichnet durch**
eine Steuereinheit (8), die derart ausgebildet ist, dass die erste Spule (3) und die zweite Spule (4) ausschließlich unabhängig voneinander, also nicht gleichzeitig betrieben werden und dass die dritte Spule (5) ausschließlich zusammen mit der zweiten Spule (4) betrieben wird.

2. Induktor nach Anspruch 1, **dadurch gekennzeichnet, dass** die Steuereinheit (8) derart ausgebildet ist, dass die erste Spule (3) mit einer ersten Betriebsfrequenz F₁ betrieben wird, wobei für die erste Betriebsfrequenz F₁ gilt: 100 kHz ≤ F₁ ≤ 220 kHz, insbesondere 110 kHz ≤ F₁ ≤ 210 kHz, und insbesondere 120 kHz ≤ F₁ ≤ 200 kHz.

3. Induktor nach Anspruch 1 oder 2, **dadurch gekennzeichnet, dass** die Steuereinheit (8) derart ausgebildet ist, dass die zweite Spule (4) mit einer zweiten Betriebsfrequenz F₂ betrieben wird, wobei für die zweite Betriebsfrequenz F₂ gilt: 40 kHz ≤ F₂ ≤ 250 kHz, insbesondere 50 kHz ≤ F₂ ≤ 200 kHz, und insbesondere 60 kHz ≤ F₂ ≤ 120kHz.

4. Induktor nach einem der Ansprüche 1 bis 3, **dadurch gekennzeichnet, dass** der magnetische Kern (14) einteilig, insbesondere als Ringkern, ausgebildet ist.

5. Induktor nach einem der Ansprüche 1 bis 4, **dadurch gekennzeichnet, dass** der magnetische Kern (14) aus mehreren Kernelementen (29) zusammengesetzt ist.

6. Induktor nach einem der Ansprüche 1 bis 5, **dadurch gekennzeichnet, dass** der magnetische Kern (14) die erste Spule (3) umgibt und insbesondere zwischen der ersten Spule (3) und der zweiten Spule (4) angeordnet ist.

7. Induktor nach einem der Ansprüche 1 bis 6, **dadurch gekennzeichnet, dass** der magnetische Kern (14) und/oder die Spulen (3, 4, 5) an einer ersten Seite (S₁), insbesondere an einer Oberseite, des Spulenträgers (2) angeordnet sind.

8. Induktor nach einem der Ansprüche 1 bis 7, **gekennzeichnet durch** mehrere magnetische Stäbe (26), die radial zu einer Mittellängsachse (M₁) der ersten Spule (3) angeordnet sind.

9. Induktor nach einem der Ansprüche 1 bis 8, **dadurch gekennzeichnet, dass** mehrere magnetische Stäbe (26) an einer zweiten Seite (S₂), insbesondere einer Unterseite, des Spulenträgers (2) angeordnet sind.

10. Induktor nach Anspruch 8 oder 9, **dadurch gekennzeichnet, dass** die magnetischen Stäbe (26) sich in einem Aufnahmebereich (A₂, A₃) der zweiten Spule (4) und/oder der dritten Spule (5), insbesondere außerhalb eines Aufnahmebereichs (A₁) der ersten Spule (3), erstrecken.

11. Induktor nach einem der Ansprüche 1 bis 10, **dadurch gekennzeichnet, dass** der Spulenträger (2) mehrere Durchgangsöffnungen (27, 28) zur Kühlung mindestens einer der Spulen (4, 5) aufweist.

12. Induktor nach einem der Ansprüche 1 bis 11, **dadurch gekennzeichnet, dass** mindestens eine der Spulen (3, 4, 5) spiralförmig ausgebildet ist.

13. Verfahren zum Betreiben eines Induktors, insbesondere zur magnetisch gekoppelten Energieübertragung, mit den Schritten:
- Bereitstellen eines Induktors (1) nach einem der Ansprüche 1 bis 12,
- Betreiben der ersten Spule (3) mit einer ersten Betriebsfrequenz F₁ in einem ersten Leistungsbereich, und
- Betreiben der zweiten Spule (4) ausschließlich unabhängig von, also nicht gleichzeitig mit der ersten Spule (3) mit einer zweiten Betriebsfrequenz F₂ in einem zweiten Leistungsbereich,
- Betreiben der dritten Spule (5) ausschließlich zusammen mit der zweiten Spule (4).

## Claims

1. Inductor, in particular for magnetically coupled energy transfer, with
- a coil carrier (2),
- a first coil (3) arranged on the coil carrier (2) for energy transfer in a first power range that has a first outer diameter D₁,
- a second coil (4) arranged on the coil carrier (2) for energy transfer in a second power range that has a second outer diameter D₂, wherein the second outer diameter D₂ is larger than the first outer diameter D₁,
- a third coil (5) arranged on the coil carrier (2) that has an outer diameter D₃ that is larger than the outer diameter D₂,a magnetic core (14) that surrounds a longitudinal center axis (M₁) of the first coil (3),
**characterized by**
a control unit (8) that is designed such that the first coil (3) and the second coil (4) are operated exclusively independently of one another, in other words not simultaneously, and that the third coil (5) is operated exclusively together with the second coil (4).

2. Inductor according to claim 1, **characterized**
**in that** the control unit (8) is designed such that the first coil (3) is operated with a first operating frequency F₁, where the following applies to the first operating frequency F₁: 100 kHz ≤ F₁ ≤ 220 kHz, in particular 110 kHz ≤ F₁ ≤ 210 kHz, and in particular 120 kHz ≤ F₁ ≤ 200 kHz.

3. Inductor according to claim 1 or 2, **characterized in**
**that** the control unit (8) is designed such that the second coil (4) is operated with a second operating frequency F₂, where the following applies to the second operating frequency F₂: 40 kHz ≤ F₂ ≤ 250 kHz, in particular 50 kHz ≤ F₂ ≤ 200 kHz, and in particular 60 kHz ≤ F₂ ≤ 120kHz.

4. Inductor according to any one of claims 1 to 3, **characterized in that** the magnetic core (14) is designed in one piece, in particular as an annular core.

5. Inductor according to any one of claims 1 to 4, **characterized in that** the magnetic core (14) is composed of a plurality of core elements (29).

6. Inductor according to any one of claims 1 to 5, **characterized in that** the magnetic core (14) surrounds the first coil (3), and in particular is arranged between the first coil (3) and the second coil (4).

7. Inductor according to any one of claims 1 to 6, **characterized in that** the magnetic core (14) and/or the coils (3, 4, 5) are arranged on a first face (S₁), in particular on an upper face, of the coil carrier (2).

8. Inductor according to any one of claims 1 to 7, **characterized by** a plurality of magnetic rods (26) that are arranged radially to a longitudinal center axis (M₁) of the first coil (3).

9. Inductor according to any one of claims 1 to 8, **characterized in that** a plurality of magnetic rods (26) are arranged on a second face (S₂), in particular on a lower face, of the coil carrier (2).

10. Inductor according to claim 8 or 9, **characterized in that** the magnetic rods (26) extend into a receptacle region (A₂, A₃) of the second coil (4) and/or of the third coil (5), in particular outside a receptacle region (A₁) of the first coil (3).

11. Inductor according to any one of claims 1 to 10, **characterized in that** the coil carrier (2) has a plurality of apertures (27, 28) for cooling at least one of the coils (4, 5).

12. Inductor according to any one of claims 1 to 11, **characterized in that** at least one of the coils (3, 4, 5) is spiral in design.

13. Method for the operation of an inductor, in particular for magnetically coupled energy transfer, with the steps:
- provision of an inductor (1) according to any one of claims 1 to 12,
- operation of the first coil (3) with a first operating frequency F₁ in a first power range, and
- operation of the second coil (4) exclusively independently of, in other words not simultaneously with, the first coil (3) with a second operating frequency F₂ in a second power range,
- operation of the third coil (5) exclusively together with the second coil (4).

## Revendications

1. Inducteur, destiné en particulier à la transmission d'énergie par couplage magnétique, avec
- un support de bobines (2),
- une première bobine (3) disposée sur le support de bobines (2), destinée à la transmission d'énergie dans une première plage de puissance et présentant un premier diamètre extérieur D₁,
- une deuxième bobine (4) disposée sur le support de bobines (2), destinée à la transmission d'énergie dans une deuxième plage de puissance et présentant un deuxième diamètre extérieur D₂, le deuxième diamètre extérieur D₂ étant supérieur au premier diamètre extérieur D₁,
- une troisième bobine (5) disposée sur le support de bobines (2), présentant un diamètre extérieur D₃ supérieur au diamètre extérieur D₂,
- un noyau magnétique (14) tournant autour d'un axe longitudinal médian (M₁) de la première bobine (3),
**caractérisé par**
une unité de commande (8), réalisée de telle manière que la première bobine (3) et la deuxième bobine (4) sont mises en service exclusivement indépendamment l'une de l'autre, donc non simultanément, et que la troisième bobine (5) est mise en service exclusivement avec la deuxième bobine (4).

2. Inducteur selon la revendication 1, **caractérisé en ce que** l'unité de commande (8) est réalisée de telle manière que la première bobine (3) est mise en service à une première fréquence de service F₁, dans lequel l'inégalité suivante s'applique pour la première fréquence de service F₁ : 100 kHz ≤ F₁ ≤ 220 kHz, en particulier 110 kHz ≤ F₁ ≤ 210 kHz, et tout particulièrement 120 kHz ≤ F₁ ≤ 200 kHz.

3. Inducteur selon la revendication 1 ou la revendication 2, **caractérisé en ce que** l'unité de commande (8) est réalisée de telle manière que la deuxième bobine (4) est mise en service à une deuxième fréquence de service F₂, dans lequel l'inégalité suivante s'applique pour la deuxième fréquence de service F₂ : 40 kHz ≤ F₂ ≤ 250 kHz, en particulier 50 kHz ≤ F₂ ≤ 200 kHz, et tout particulièrement 60 kHz ≤ F₂ ≤ 120kHz.

4. Inducteur selon l'une des revendications 1 à 3, **caractérisé en ce que** le noyau magnétique (14) est réalisé en une seule pièce, en particulier en tant que noyau annulaire.

5. Inducteur selon l'une des revendications 1 à 4, **caractérisé en ce que** le noyau magnétique (14) est constitué de plusieurs éléments de noyau (29).

6. Inducteur selon l'une des revendications 1 à 5, **caractérisé en ce que** le noyau magnétique (14) entoure la première bobine (3) et est en particulier disposé entre la première bobine (3) et la deuxième bobine (4).

7. Inducteur selon l'une des revendications 1 à 6, **caractérisé en ce que** le noyau magnétique (14) et/ou les bobines (3, 4, 5) sont disposés sur une première face (S₁), en particulier une face supérieure, du support de bobines (2).

8. Inducteur selon l'une des revendications 1 à 7, **caractérisé par** plusieurs barres magnétiques (26), disposées radialement par rapport à un axe longitudinal médian (M₁) de la première bobine (3).

9. Inducteur selon l'une des revendications 1 à 8, **caractérisé en ce que** plusieurs barres magnétiques (26) sont disposées sur une deuxième face (S₂), en particulier une face inférieure, du support de bobines (2).

10. Inducteur selon la revendication 8 ou 9, **caractérisé en ce que** les barres magnétiques (26) s'étendent dans une zone de réception (A₂, A₃) de la deuxième bobine (4) et/ou de la troisième bobine (5), en particulier en dehors d'une zone de réception (A₁) de la première bobine (3).

11. Inducteur selon l'une des revendications 1 à 10, **caractérisé en ce que** le support de bobines (2) présente plusieurs ouvertures de passage (27, 28) pour le refroidissement d'au moins une des bobines (4, 5).

12. Inducteur selon l'une des revendications 1 à 11, **caractérisé en ce qu'**au moins une des bobines (3, 4, 5) est réalisée en forme de spirale.

13. Procédé de fonctionnement d'un inducteur, destiné en particulier à la transmission d'énergie par couplage magnétique, comprenant les étapes suivantes :
- mise à disposition d'un inducteur (1) selon l'une des revendications 1 à 12,
- mise en service de la première bobine (3) à une première fréquence de service F₁ dans une première plage de puissance, et
- mise en service de la deuxième bobine (4) exclusivement indépendamment de la première bobine (3), donc non simultanément avec celle-ci, à une deuxième fréquence de service F₂ dans une deuxième plage de puissance,
- mise en service de la troisième bobine (5) exclusivement avec la deuxième bobine (4).
